(19) **Europäisches Patentamt / European Patent Office / Office européen des brevets**

(11) **EP 4 578 753 A1**

(12) **EUROPEAN PATENT APPLICATION**
published in accordance with Art. 153(4) EPC

(43) Date of publication:
**02.07.2025 Bulletin 2025/27**

(51) International Patent Classification (IPC):
**B60W 50/02** (2012.01)    **B60L 15/20** (2006.01)

(21) Application number: 23856711.9

(22) Date of filing: **25.08.2023**

(86) International application number:
**PCT/CN2023/114836**

(87) International publication number:
**WO 2024/041624 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.08.2022 CN 202211027723**

(71) Applicant: **XPT EDS (Hefei) Co., Ltd.**
**Hefei, Anhui 230601 (CN)**

(72) Inventors:
• GONG, Wentao
  Shanghai 201804 (CN)

• LI, Jiqiang
  Shanghai 201804 (CN)
• BI, Lu
  Shanghai 201804 (CN)
• XU, Shilong
  Shanghai 201804 (CN)
• REN, Chuanwei
  Shanghai 201804 (CN)
• LI, Xiaolong
  Shanghai 201804 (CN)
• SHEN, Yong
  Shanghai 201804 (CN)

(74) Representative: **Vossius & Partner**
**Patentanwälte Rechtsanwälte mbB**
**Siebertstrasse 3**
**81675 München (DE)**

(54) **FAULT DIAGNOSIS METHOD FOR HYDRAULIC SYSTEM, CONTROL METHOD FOR VEHICLE DRIVING SYSTEM, AND VEHICLE**

(57) A fault diagnosis method for a hydraulic system, a method for controlling a vehicle drive system, and a vehicle, which relate to the technical field of vehicle control and aim to solve the technical problem of a fault diagnosis for a hydraulic system. The fault diagnosis method includes: obtaining an actual oil pressure output by an oil pump unit, a maximum oil pressure threshold and a minimum oil pressure threshold; determining whether the actual oil pressure is greater than the maximum oil pressure threshold, or whether the actual oil pressure is less than the minimum oil pressure threshold; and if the actual oil pressure is greater than the maximum oil pressure threshold, determining that a blockage is present in the hydraulic system; or if the actual oil pressure is less than the minimum oil pressure threshold, determining that a leakage is present in the hydraulic system. The fault diagnosis for the hydraulic system is achieved, and the accuracy of determining a fault of the hydraulic system is increased, thereby facilitating safe driving of a vehicle.

FIG. 1

## Description

The invention claims the priority to Chinese Patent Application No. CN 202211027723.1, filed on August 25, 2022, and entitled "FAULT DIAGNOSIS METHOD FOR HYDRAULIC SYSTEM, METHOD FOR CONTROLLING VEHICLE DRIVE SYSTEM, AND VEHICLE", which is incorporated herein by reference in its entirety.

## Technical Field

The invention relates to the technical field of vehicle control, and particularly provides a fault diagnosis method for a hydraulic system, a method for controlling a vehicle drive system, and a vehicle.

## Background Art

Currently, a vehicle drive system includes a hydraulic system, a drive motor, a transmission, etc. The hydraulic system includes an oil pump unit, an oil filter, an oil cooler, a hydraulic flow channel, etc.

The existing oil pump has no pressure feedback function, and only outputs a target flow according to a request. Moreover, a conventional hydraulic system is open-loop controlled, a leakage or blockage of the hydraulic system cannot be diagnosed, which often causes the problem of premature thermal failure of the vehicle drive system.

Accordingly, there is a need in the art for a new fault diagnosis solution for a hydraulic system to solve the above problem.

## Summary

To overcome the above disadvantage, the invention is provided to solve or at least partially solve the above technical problem. The invention provides a fault diagnosis method for a hydraulic system, a method for controlling a vehicle drive system, and a vehicle.

In a first aspect, the invention provides a fault diagnosis method for a hydraulic system, the hydraulic system including an oil pump unit, and the method including: obtaining an actual oil pressure output by the oil pump unit, a maximum oil pressure threshold and a minimum oil pressure threshold; determining whether the actual oil pressure is greater than the maximum oil pressure threshold, or whether the actual oil pressure is less than the minimum oil pressure threshold; and if the actual oil pressure is greater than the maximum oil pressure threshold, determining that a blockage is present in the hydraulic system; or if the actual oil pressure is less than the minimum oil pressure threshold, determining that a leakage is present in the hydraulic system.

In an implementation, the oil pump unit includes an oil pump and a motor; and obtaining the actual oil pressure output by the oil pump unit includes: obtaining a current oil temperature of the oil pump and a rotational speed of the motor; determining an output flow of the oil pump based on the current oil temperature and the rotational speed of the motor; obtaining a current of the motor; determining an output torque of the motor based on the current of the motor and the current oil temperature; and determining the actual oil pressure based on the output flow of the oil pump and the output torque of the motor.

In an implementation, determining the actual oil pressure based on the output flow of the oil pump and the output torque of the motor includes: determining the actual oil pressure based on a corresponding relationship between the output flow of the oil pump, the output torque of the motor and the actual oil pressure.

In an implementation, obtaining the maximum oil pressure threshold and the minimum oil pressure threshold includes: obtaining the maximum oil pressure threshold and the minimum oil pressure threshold based on the current oil temperature and the output flow of the oil pump.

In an implementation, obtaining the maximum oil pressure threshold and the minimum oil pressure threshold includes: calculating an oil pressure based on the output flow of the oil pump; and determining the maximum oil pressure threshold and the minimum oil pressure threshold based on the oil pressure.

In an implementation, a calculation formula for calculating the oil pressure based on the output flow of the oil pump is:

$$P = A * Q^2 + B * Q$$

where P is the oil pressure, $Q$ is the output flow of the oil pump, and A and $B$ are oil temperature coefficients.

In a second aspect, the invention provides a method for controlling a vehicle drive system including a hydraulic system and a drive motor, the method including:

diagnosing a fault of the hydraulic system by a fault diagnosis method for a hydraulic system as described above, the fault including a blockage and a leakage;
replacing an oil filter of the hydraulic system when the blockage is present in the hydraulic system; or
reducing an output torque of the drive motor when the leakage is present in the hydraulic system.

In a third aspect, there is provided an electronic device, including a processor and a storage apparatus adapted to store a plurality of program codes, where the program codes are adapted to be loaded and run by the processor to perform a fault diagnosis method for a hydraulic system according to any one of the above implementations or a method for controlling a vehicle drive system as described above.

In a fourth aspect, there is provided a computer-readable storage medium having a plurality of program codes stored therein, where the program codes are adapted to be loaded and run by a processor to perform a fault diagnosis method for a hydraulic system according to any one of the above implementations or a method for controlling a vehicle drive system as described above.

In a fifth aspect, there is provided a vehicle, including an electronic device as described above.

The one or more technical solutions of the invention described above have at least one or more of the following beneficial effects.

In the fault diagnosis method for a hydraulic system of the invention, first, the actual oil pressure output by the oil pump unit, the maximum oil pressure threshold value and the minimum oil pressure threshold value are obtained, and based on the actual oil pressure, the maximum oil pressure threshold and the minimum oil pressure threshold, whether a fault is present in the hydraulic system and a specific type of the fault are determined. Specifically, if the actual oil pressure is greater than the maximum oil pressure threshold, it is determined that a blockage is present in the hydraulic system, or if the actual oil pressure is less than the minimum oil pressure threshold, it is determined that a leakage is present in the hydraulic system. In this way, a precise fault diagnosis for the hydraulic system is achieved, and basic support is provided for subsequent handling of various faults, thereby facilitating safe driving of a vehicle.

## Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention. In addition, similar numbers in the figures are used to represent similar components, in which:

FIG. 1 is a schematic flowchart of main steps of a fault diagnosis method for a hydraulic system according to an embodiment of the invention;

FIG. 2 is a schematic diagram of a specific process for obtaining an actual oil pressure according to an embodiment of the invention;

FIG. 3 is a schematic diagram illustrating a corresponding relationship between a current oil temperature, a rotational speed and an output flow according to an embodiment of the invention;

FIG. 4 is a schematic diagram illustrating a corresponding relationship between a phase current, a current oil temperature, and an output torque according to an embodiment of the invention;

FIG. 5 is a schematic diagram illustrating a corresponding relationship between an output flow, an output torque, and an actual oil pressure according to an embodiment of the invention;

FIG. 6 is a schematic diagram illustrating a corresponding relationship between an output flow and an oil pressure at different temperatures according to an embodiment of the invention;

FIG. 7 is a schematic flowchart of main steps of a method for controlling a vehicle drive system according to an embodiment of the invention;

FIG. 8 is a complete schematic flowchart of a method for controlling a vehicle drive system according to an embodiment of the invention; and

FIG. 9 is a schematic block diagram of a main structure of an electronic device according to an embodiment of the invention.

## Detailed Description of Embodiments

Some implementations of the invention are described below with reference to the accompanying drawings. Those skilled in the art should understand that these implementations are merely used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

Currently, the existing oil pump has no pressure feedback function, and only outputs a target flow according to a request. Moreover, a conventional hydraulic system is open-loop controlled, a leakage or blockage of the hydraulic system cannot be diagnosed, which often causes the problem of premature thermal failure of the vehicle drive system.

To this end, the invention provides a fault diagnosis method for a hydraulic system, a method for controlling a vehicle drive system, and a vehicle. First, an actual oil pressure output by an oil pump unit, a maximum oil pressure threshold value and a minimum oil pressure threshold value are obtained, and based on the actual oil pressure, the maximum oil pressure threshold and the minimum oil pressure threshold, whether a fault is present in the hydraulic system and a specific type of the fault are determined. Specifically, if the actual oil pressure is greater than the maximum oil pressure threshold, it is determined that a blockage is present in the hydraulic system, or if the actual oil pressure is less than the minimum oil pressure threshold, it is determined that a leakage is present in the hydraulic system. In this way, the fault diagnosis for the hydraulic system is achieved, and basic support is provided for subsequent handling of various faults, thereby facilitating safe driving of a vehicle.

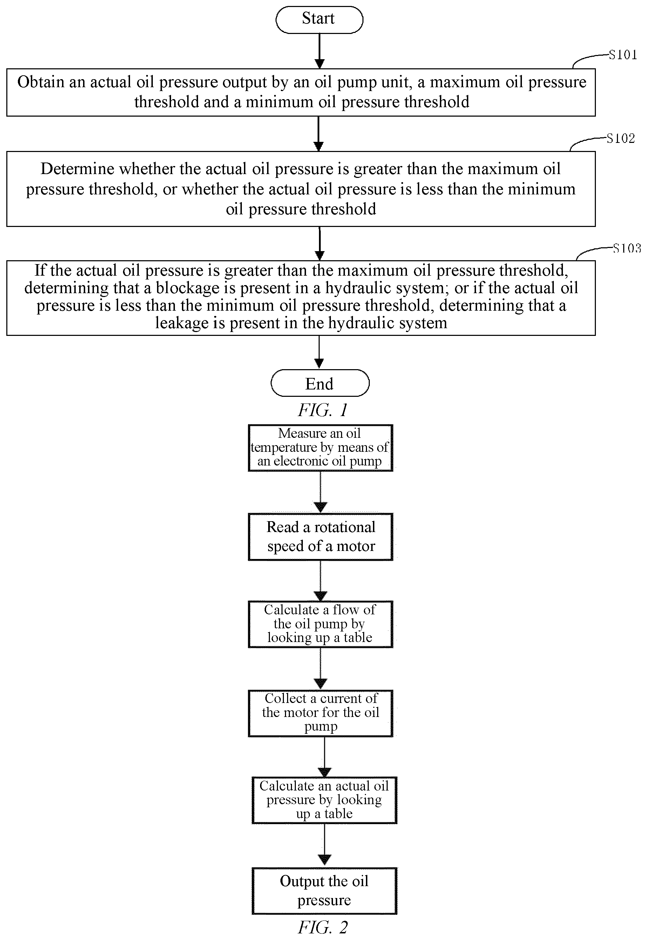

Referring to FIG. 1, FIG. 1 is a schematic flowchart of main steps of a fault diagnosis method for a hydraulic system according to an embodiment of the invention.

As shown in FIG. 1, the fault diagnosis method for a hydraulic system according to an embodiment of the invention mainly includes the following steps S101 to S103, where the hydraulic system includes an oil pump unit.

In step S101, an actual oil pressure output by the oil pump unit, a maximum oil pressure threshold and a minimum oil pressure threshold are obtained.

In a specific implementation, the oil pump unit includes an oil pump and a motor, such as, but not limited to, a DC motor such as a brushless DC motor. As shown in FIG. 2, obtaining the actual oil pressure output by the oil pump unit is specifically implemented by the following steps.

First, a current oil temperature of the oil pump and a rotational speed of the motor are obtained. In a specific implementation, the current oil temperature may be collected by an oil temperature sensor integrated in the oil pump unit.

An output flow of the oil pump is determined based on the current oil temperature and the rotational speed of the motor.

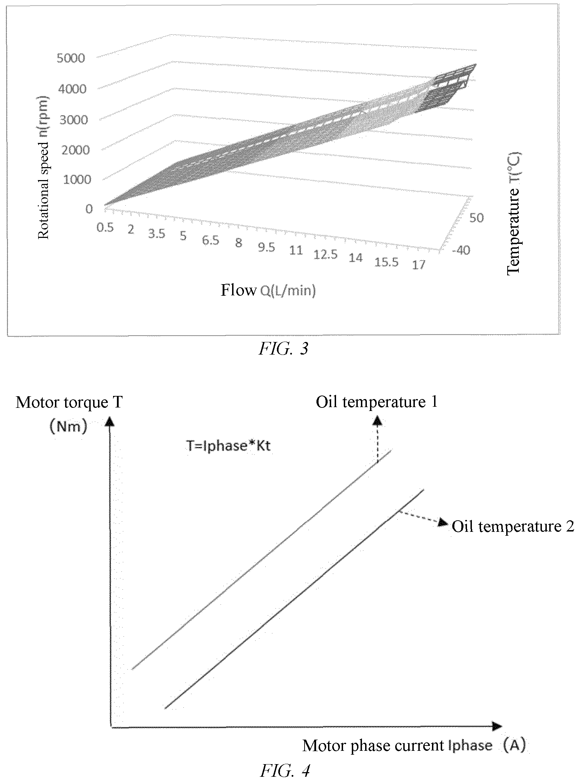

Since the motor is immersed in oil, the current oil temperature is also a motor temperature of the motor. The rotational speed of the motor may be, for example, measured by a motor controller or collected by a rotational speed sensor. After the current oil temperature and the rotational speed of the motor are obtained, the output flow of the oil pump can be obtained by means of a corresponding relationship between the current oil temperature, the rotational speed and the output flow of the oil pump. FIG. 3 shows an example of a corresponding relationship between the current oil temperature, the rotational speed of the motor and the output flow of the oil pump, but the invention is not limited thereto.

Then, a current of the motor is obtained. For example, the current of the motor is measured by the motor controller, and the current may be, for example, a phase current of the motor.

An output torque of the motor is determined based on the current of the motor and the current oil temperature. Specifically, the output torque of the motor is obtained by means of a corresponding relationship between the current of the motor, the current oil temperature and the output torque of the motor. FIG. 4 shows an example of a corresponding relationship between the phase current of the motor, the current oil temperature and the output torque of the motor, but the invention is not limited thereto. In a case that the motor is a DC motor, the relationship between the output torque and the current of the DC motor at different oil temperatures can be expressed as $T = K(T) * I_{phase}$, where T is the output torque, $I_{phase}$ is the current, K(T) is a torque constant of the motor, and K(T) is related to the motor temperature.

Finally, the actual oil pressure is determined based on the output flow of the oil pump and the output torque of the motor.

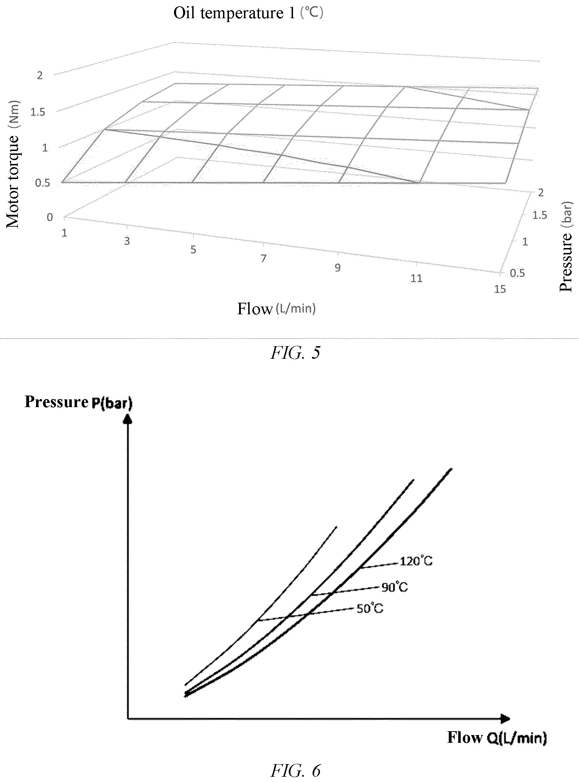

In a specific implementation, determining the actual oil pressure based on the output flow of the oil pump and the output torque of the motor includes: determining the actual oil pressure based on a corresponding relationship between the output flow of the oil pump, the output torque of the motor and the actual oil pressure. FIG. 5 shows an example of a corresponding relationship between the output flow of the oil pump, the output torque of the motor and the actual oil pressure, but the invention is not limited thereto.

In a specific implementation, the corresponding relationship between the current oil temperature, the rotational speed of the motor and the output flow of the oil pump, the corresponding relationship between the current of the motor, the current oil temperature and the output torque of the motor, and the corresponding relationship between the output flow of the oil pump, the output torque of the motor and the actual oil pressure are stored in a database in detail in the form of tables. In a practical application scenario, when the current oil temperature t (°C) and the rotational speed (rpm) of the motor are given, the output flow Q (L/min) of the oil pump can be obtained by looking up a table in FIG. 3. When the current $I_{phase}$ (A) of the motor and the current oil temperature t (°C) are given, the output torque T (N*m) of the motor can be obtained by looking up a table in FIG. 4. When the output flow Q (L/min) and the output torque T (N*m) are given, the actual oil pressure output by the oil pump unit in this case can be obtained by looking up a table in FIG. 5.

In a specific implementation, obtaining the maximum oil pressure threshold and the minimum oil pressure threshold includes: obtaining the maximum oil pressure threshold and the minimum oil pressure threshold based on the current oil temperature and the output flow.

Specifically, in the invention, a corresponding relationship between the current oil temperature, the output flow and an oil pressure threshold interval is stored in the database in advance, where each oil pressure threshold interval includes a maximum oil pressure threshold and a minimum oil pressure threshold. In a practical application scenario, specifically, the corresponding maximum oil pressure threshold and minimum oil pressure threshold can be obtained from the database based on the current oil temperature and the output flow of the oil pump unit.

FIG. 6 shows an example of different output flows corresponding to different actual oil pressures at different oil temperatures, but the invention is not limited thereto.

In a specific implementation, obtaining the maximum oil pressure threshold and the minimum oil pressure threshold includes: calculating an oil pressure based on the output flow of the oil pump; and determining the maximum oil pressure threshold and the minimum oil pressure threshold based on the oil pressure.

When the maximum oil pressure threshold and the minimum oil pressure threshold are not obtained based on the current oil temperature and the output flow of the oil pump, it indicates that the maximum oil pressure threshold and the minimum oil pressure threshold corresponding to the current oil temperature and the output flow of the oil pump are absent in the database. In this case, the oil pressure can be calculated by means of the output flow of the oil pump, as specifically shown in the following formula (1), and the maximum oil pressure threshold and the minimum oil pressure threshold are determined based on the oil pressure. For example, the calculated oil pressure is used as both the maximum oil pressure threshold and the minimum oil pressure threshold.

In a specific implementation, a calculation formula for calculating the oil pressure based on the output flow of the oil pump is:

$$\mathrm{P} = \mathrm{A} * Q^2 + B * Q \quad (1)$$

where P is the oil pressure, Q is the output flow of the oil pump, and A and B are oil temperature coefficients.

In some embodiments, the oil pump, the motor, the motor controller, and the oil temperature sensor are integrated in the oil pump unit, and the actual oil pressure is obtained by means of a specific calculation process. Obtaining the actual oil pressure by means of calculation has a higher precision than collecting an oil pressure directly by means of a pressure sensor.

In step S102, whether the actual oil pressure is greater than the maximum oil pressure threshold, or whether the actual oil pressure is less than the minimum oil pressure threshold is determined.

In step S103, if the actual oil pressure is greater than the maximum oil pressure threshold, it is determined that a blockage is present in the hydraulic system; or if the actual oil pressure is less than the minimum oil pressure threshold, it is determined that a leakage is present in the hydraulic system.

Specifically, the actual oil pressure is compared with both the maximum oil pressure threshold and the minimum oil pressure threshold to determine whether a fault is present in the hydraulic system and a specific type of the fault. Specifically, if the actual oil pressure is greater than the maximum oil pressure threshold, it indicates that a blockage is present in the hydraulic system; and if the actual oil pressure is less than the minimum oil pressure threshold, it indicates that a leakage is present in the hydraulic system.

Based on the steps S101-S103 described above, first, the actual oil pressure output by the oil pump unit, the maximum oil pressure threshold value and the minimum oil pressure threshold value are obtained, and based on the actual oil pressure, the maximum oil pressure threshold and the minimum oil pressure threshold, whether a fault is present in the hydraulic system and a specific type of the fault are determined. Specifically, if the actual oil pressure is greater than the maximum oil pressure threshold, it is determined that a blockage is present in the hydraulic system, or if the actual oil pressure is less than the minimum oil pressure threshold, it is determined that a leakage is present in the hydraulic system. In this way, the fault diagnosis for the hydraulic system is achieved, the accuracy of determining a fault of the hydraulic system is increased, and basic support is provided for subsequent handling of various faults, thereby facilitating safe driving of a vehicle.

Further, the invention also provides a method for controlling a vehicle drive system. Generally, the vehicle drive system includes a hydraulic system, a transmission, an electric drive controller, a drive motor, etc.

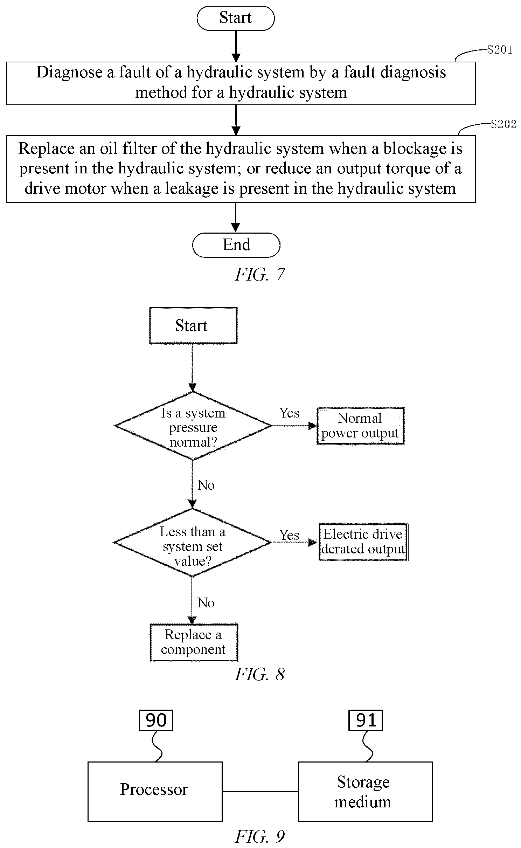

As shown in FIG. 7, the method for controlling a vehicle drive system may be specifically implemented by the following steps S201 to S202.

In step S201, a fault of the hydraulic system is diagnosed by the fault diagnosis method for a hydraulic system as described above, the fault including a blockage and a leakage.

For specific implementation steps for diagnosing a fault of the hydraulic system, reference may be made to the embodiment described above, and details are not described herein again.

In step S202, an oil filter of the hydraulic system, specifically, a filter element of the oil filter, is replaced when the blockage is present in the hydraulic system.

An output torque of the drive motor is reduced when the leakage is present in the hydraulic system, so as to protect the vehicle drive system from thermal failure, such as overheating or wear.

By determining whether a fault is present in the hydraulic system and a specific type of the fault, various faults may be handled in different ways, so that the fault of the hydraulic system is determined precisely and efficiently, and the fault can also be handled in a timely manner, thereby forming a closed-loop control, improving the safety performance of the vehicle, and facilitating safe driving of the vehicle.

Exemplarily, the actual oil pressure output by the oil pump unit may be sent to the electric drive controller, so that the electric drive controller determines whether a fault is present in the hydraulic system and a specific type of the fault. As shown in FIG. 8, if the actual oil pressure is less than the minimum oil pressure threshold set by the system, it indicates that a leakage is present in the hydraulic system, and then the output torque of the drive motor is reduced. Or if the actual oil pressure is greater than the maximum oil pressure threshold set by the system, it indicates that a blockage is present in the hydraulic system, and then the filter element of the oil filter is replaced.

It should be noted that, although the steps are described in a particular sequence in the above embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

Those skilled in the art may understand that all or some of the procedures in the methods in the above embodiments of the invention may be implemented by using a computer program instructing related hardware. The computer program may be stored in a computer-readable storage medium. When the computer program is executed by a processor, the steps in the above method embodiments may be implemented. The computer program includes computer program code, and the computer program code may be in the form of source code, target code, and an executable file, or in some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention also provides an electronic device. In an embodiment of the electronic device according to the invention, as shown in FIG. 9, the electronic device includes a processor 90 and a storage apparatus 91. The storage apparatus may be configured to store a program for performing the fault diagnosis method for a hydraulic system or the method for controlling a vehicle drive system in the above method embodiments, and the processor may be configured to execute a program in the storage apparatus. The program includes but is not limited to the program for performing the fault diagnosis method for a hydraulic system or the method for controlling a vehicle drive system in the above method embodiments. For ease of description, only parts related to the embodiments of the invention are shown. For specific technical details that are not disclosed, refer to the method part of the embodiments of the invention.

Further, the invention also provides a computer-readable storage medium. In an embodiment of the computer-readable storage medium according to the invention, the computer-readable storage medium may be configured to store a program for performing the fault diagnosis method for a hydraulic system or the method for controlling a vehicle drive system in the above method embodiments. The program may be loaded and run by a processor to implement the fault diagnosis method for a hydraulic system and the method for controlling a vehicle drive system as described above. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, the invention also provides a vehicle, including an electronic device as described above.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

**Claims**

1. A fault diagnosis method for a hydraulic system, **characterized in that** the hydraulic system comprises an oil pump unit, and the method comprises:

   obtaining an actual oil pressure output by the oil pump unit, a maximum oil pressure threshold and a minimum oil pressure threshold;
   determining whether the actual oil pressure is greater than the maximum oil pressure threshold, or whether the actual oil pressure is less than the minimum oil pressure threshold; and
   if the actual oil pressure is greater than the maximum oil pressure threshold, determining that a blockage is present in the hydraulic system; or if the actual oil pressure is less than the minimum oil pressure threshold, determining that a leakage is present in the hydraulic system.

2. The fault diagnosis method for a hydraulic system according to claim 1, **characterized in that** the oil pump unit comprises an oil pump and a motor; and obtaining the actual oil pressure output by the oil pump unit comprises:

obtaining a current oil temperature of the oil pump and a rotational speed of the motor;
determining an output flow of the oil pump based on the current oil temperature and the rotational speed of the motor;
obtaining a current of the motor;
determining an output torque of the motor based on the current of the motor and the current oil temperature; and
determining the actual oil pressure based on the output flow of the oil pump and the output torque of the motor.

3. The fault diagnosis method for a hydraulic system according to claim 2, **characterized in that** determining the actual oil pressure based on the output flow of the oil pump and the output torque of the motor comprises: determining the actual oil pressure based on a corresponding relationship between the output flow of the oil pump, the output torque of the motor and the actual oil pressure.

4. The fault diagnosis method for a hydraulic system according to claim 2, **characterized in that** obtaining the maximum oil pressure threshold and the minimum oil pressure threshold comprises: obtaining the maximum oil pressure threshold and the minimum oil pressure threshold based on the current oil temperature and the output flow of the oil pump.

5. The fault diagnosis method for a hydraulic system according to claim 2, **characterized in that** obtaining the maximum oil pressure threshold and the minimum oil pressure threshold comprises:

calculating an oil pressure based on the output flow of the oil pump; and
determining the maximum oil pressure threshold and the minimum oil pressure threshold based on the oil pressure.

6. The fault diagnosis method for a hydraulic system according to claim 5, **characterized in that** a calculation formula for calculating the oil pressure based on the output flow of the oil pump is:

$$P = A * Q^2 + B * Q$$

wherein P is the oil pressure, Q is the output flow of the oil pump, and A and B are oil temperature coefficients.

7. A method for controlling a vehicle drive system comprising a hydraulic system and a drive motor, **characterized in that** the method comprises:

diagnosing a fault of the hydraulic system by a method according to any one of claims 1-6, the fault comprising a blockage and a leakage;
replacing an oil filter of the hydraulic system when the blockage is present in the hydraulic system; or
reducing an output torque of the drive motor when the leakage is present in the hydraulic system.

8. An electronic device, comprising a processor and a storage apparatus adapted to store a plurality of program codes, **characterized in that** the program codes are adapted to be loaded and run by the processor to perform a fault diagnosis method for a hydraulic system according to any one of claims 1-6 or a method for controlling a vehicle drive system according to claim 7.

9. A computer-readable storage medium having a plurality of program codes stored therein, **characterized in that** the program codes are adapted to be loaded and run by a processor to perform a fault diagnosis method for a hydraulic system according to any one of claims 1-6 or a method for controlling a vehicle drive system according to claim 7.

10. A vehicle, **characterized by** comprising an electronic device according to claim 8.

Start

Obtain an actual oil pressure output by an oil pump unit, a maximum oil pressure threshold and a minimum oil pressure threshold

S101

Determine whether the actual oil pressure is greater than the maximum oil pressure threshold, or whether the actual oil pressure is less than the minimum oil pressure threshold

S102

If the actual oil pressure is greater than the maximum oil pressure threshold, determining that a blockage is present in a hydraulic system; or if the actual oil pressure is less than the minimum oil pressure threshold, determining that a leakage is present in the hydraulic system

S103

End

*FIG. 1*

Measure an oil temperature by means of an electronic oil pump

Read a rotational speed of a motor

Calculate a flow of the oil pump by looking up a table

Collect a current of the motor for the oil pump

Calculate an actual oil pressure by looking up a table

Output the oil pressure

*FIG. 2*

*FIG. 3*

*FIG. 4*

Oil temperature 1 (°C)

FIG. 5

FIG. 6

Start

Diagnose a fault of a hydraulic system by a fault diagnosis method for a hydraulic system ⌐S201

Replace an oil filter of the hydraulic system when a blockage is present in the hydraulic system; or reduce an output torque of a drive motor when a leakage is present in the hydraulic system ⌐S202

End

*FIG. 7*

Start

Is a system pressure normal? — Yes → Normal power output

No

Less than a system set value? — Yes → Electric drive derated output

No

Replace a component

*FIG. 8*

90    91

Processor    Storage medium

*FIG. 9*

## INTERNATIONAL SEARCH REPORT

| International application No. |
| --- |
| **PCT/CN2023/114836** |

**A. CLASSIFICATION OF SUBJECT MATTER**

B60W50/02(2012.01)i; B60L15/20(2006.01)i

According to International Patent Classification (IPC) or to both national classification and IPC

**B. FIELDS SEARCHED**

Minimum documentation searched (classification system followed by classification symbols)

IPC:B60W,B60L

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, WPABS, CJFD: 液压, 油泵, 故障, 诊断, 油压, 油温, 阈, 堵塞, 泄露, 电机, 转速, 流量, hydraulic, oil, pump, faults, diagnostics, pressure, temperature, threshold, blockage, leak, Motor, rotation, speed, flow

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115303292 A (NIO POWER TECHNOLOGY (HEFEI) CO., LTD.) 08 November 2022 (2022-11-08) <br> claims 1-10 | 1-10 |
| X | CN 104442800 A (SAIC MOTOR CORP., LTD.) 25 March 2015 (2015-03-25) <br> description, paragraphs [0019]-[0024], and figures 1-5 | 1, 7-10 |
| Y | CN 104442800 A (SAIC MOTOR CORP., LTD.) 25 March 2015 (2015-03-25) <br> description, paragraphs [0019]-[0024], and figures 1-5 | 2-6 |
| Y | CN 112433151 A (SAIC MOTOR CORP., LTD.) 02 March 2021 (2021-03-02) <br> description, paragraphs [0055]-[0089], and figures 1-4 | 2-6 |
| A | CN 113357032 A (DONGFENG MOTOR GROUP CO., LTD.) 07 September 2021 (2021-09-07) <br> entire document | 1-10 |
| A | JP 2016070488 A (CATERPILLAR SARL) 09 May 2016 (2016-05-09) <br> entire document | 1-10 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 October 2023** | **23 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | | International application No.<br>**PCT/CN2023/114836** |
|---|---|---|

| Patent document<br>cited in search report | Publication date<br>(day/month/year) | Patent family member(s) | Publication date<br>(day/month/year) |
|---|---|---|---|
| CN     115303292     A | 08 November 2022 | None | |
| CN     104442800     A | 25 March 2015 | None | |
| CN     112433151     A | 02 March 2021 | None | |
| CN     113357032     A | 07 September 2021 | None | |
| JP     2016070488     A | 09 May 2016 | None | |

Form PCT/ISA/210 (patent family annex) (July 2022)

**EP 4 578 753 A1**

**REFERENCES CITED IN THE DESCRIPTION**

**Patent documents cited in the description**

- CN 202211027723